Europäisches Patentamt

European Patent Office

Office européen des brevets

(19)

(11) Veröffentlichungsnummer: **0 536 614 B1**

(12) ## EUROPÄISCHE PATENTSCHRIFT

(45) Veröffentlichungstag der Patentschrift: **06.09.95**

(21) Anmeldenummer: **92116521.3**

(22) Anmeldetag: **28.09.92**

(51) Int. Cl.6: **C08G 18/32**, C08G 18/80, C09D 175/06, C08G 18/10, C08G 18/40

(54) Hitzehärtbares Beschichtungsmittel und seine Verwendung.

(30) Priorität: **10.10.91 DE 4133517**

(43) Veröffentlichungstag der Anmeldung:
**14.04.93 Patentblatt 93/15**

(45) Bekanntmachung des Hinweises auf die
Patenterteilung:
**06.09.95 Patentblatt 95/36**

(84) Benannte Vertragsstaaten:
**AT BE CH DE ES FR GB IT LI NL SE**

(56) Entgegenhaltungen:
**EP-A- 0 034 272**
**EP-A- 0 324 338**
**EP-A- 0 407 829**
**FR-A- 2 143 413**

(73) Patentinhaber: **BAYER AG**

**D-51368 Leverkusen (DE)**

(72) Erfinder: **König, Eberhard, Dr.**
**Arthur-Hantzsch-Strasse 50**
**W-5000 Köln 80 (DE)**
Erfinder: **Schrader, Friedrich**
-----
**verstorben (DE)**
Erfinder: **Burgdörfer, Hans-Heribert**
**Goffineweg 49**
**W-5000 Köln 80 (DE)**

EP 0 536 614 B1

Rank Xerox (UK) Business Services
(3.10/3.09/3.3.3)

## Beschreibung

Die Erfindung betrifft ein neues hitzehärtbares Beschichtungsmittel auf Basis von $\epsilon$-Caprolactam-blockierten Isocyanat-Vorpolymeren und cycloaliphatischen Polyaminen und seine Verwendung zur Herstellung von überbrennfesten, steinschlagfesten Grundierungen (Primer) auf metallischen Substraten.

An steinschlagfeste Grundierungen bei Automobilen werden spezielle mechanische Ansprüche gestellt, um den mehrschichtigen Lackaufbau vor Steinschlagschäden, letztendlich aber das Karosserieblech vor Korrosion zu schützen.

Einen bekannten Lösungsweg bieten Beschichtungsmittel, die Polyurethanharnstoffe enthalten. Polyurethanharnstoffe als Bindemittel müssen, wenn man dicke Lackschichten aufbauen will, aus relativ niedermolekularen Komponenten, nämlich den blockierten NCO-Vorpolymerisaten einerseits und den Diaminen andererseits, erzeugt werden. Derartige Bindemittel gehören zum Stand der Technik und werden beispielsweise in der DE-PS 2 131 299 beschrieben. Die in dieser Vorveröffentlichung beschriebenen $\epsilon$-Caprolactam-blockierten NCO-Prepolymeren stellen Umsetzungsprodukte von aromatischen Diisocyanaten und solchen Hydroxylgruppen aufweisenden Polymerisations- oder Polykondensationsprodukten dar, die gegenüber einen inert sind. Vorzugsweise handelt es sich bei den zur Herstellung der NCO-Prepolymeren eingesetzten Hydroxylgruppen aufweisenden Verbindungen um die üblichen Polyetherpolyole der Polyurethanchemie. Polyesterpolyole werden in diesem Zusammenhang nicht genannt, offensichtlich wegen der Möglichkeit aminolytischer Nebenreaktionen der Esterbindungen mit den freien Aminogruppen des Härters bei der Lagerung und Vernetzung der Beschichtungsmittel. Der Vorteil der Systeme der genannten Vorveröffentlichung liegt in dem Zusammenspiel von Hartsegmenten (Polyharnstoffgruppen) und Weichsegmenten (Polyetheranteile), die die zäh-elastischen Lackfilmeigenschaften für einen guten Steinschlagschutz liefern.

Der Nachteil der bekannten Bindemittel liegt jedoch in ihrer Empfindlichkeit gegenüber einer Erhöhung der Einbrenntemperatur. Wird exakt bei 160 °C eingebrannt, erhält man optimale Filmeigenschaften. Schon bei 180 °C als Einbrenntemperatur resultiert ein bleibend weicher Film. Bei einer Einbrenntemperatur von 200 °C verschlimmert sich die Situation in Bezug auf die Filmeigenschaften nochmals. Insbesondere im sogenannten Overspraybereich, wo die dickschichtige Steinschlagschutzbeschichtung dünnschichtig ausläuft, kommt es dann oft zum Haftungsverlust der darüber aufgetragenen Lackschichten von Füller und Decklack.

In der Praxis, insbesondere bei der Automobillackierung, kann die Einbrenntemperatur nicht immer eng zwischen 160 und 170 °C gehalten werden, wie es zur Optimierung der Eigenschaften der bekannten Beschichtungsmittel erforderlich wäre. Daher werden sogenannte überbrennfeste Beschichtungsmittel gefordert, die ohne Beeinträchtigung der lacktechnischen Eigenschaften der Überzüge Einbrenntemperaturen von bis zu 200 °C überstehen. Die Bereitstellung derartiger überbrennfester Beschichtungsmittel, insbesondere zur Herstellung von Steinschlagschutzgrundierungen war daher die der Erfindung zugrunde liegende Aufgabe, die mit den nachstehend näher beschriebenen erfindungsgemäßen Beschichtungsmitteln gelöst werden konnte.

Überraschenderweise wurde gefunden, daß Beschichtungsmittel auf Basis von $\epsilon$-Caprolactam-blockierten NCO-Prepolymeren aus aromatischen Diisocyanaten und im wesentlichen aus Polyesterpolyolen bestehenden Polyhydroxylverbindungen und aliphatischen Polyaminen auch nach extremen Einbrennbedingungen (z.B. 200 °C während eines Zeitraumes von 20 min) Beschichtungen ergeben, die, im Gegensatz zu den Beschichtungen der DE-PS 2 131 299, die vom Verband der Deutschen Automolbilindustrie zugelassene Steinschlagprüfung sehr gut überstehen. Ebenfalls überraschend war hierbei die Beobachtung, daß die gleichzeitige Anwesenheit von Ester-und freien Aminogruppen in den Systemen weder zu unerwünschten Nebenreaktionen während des Einbrennprozesses noch zu einer Beeinträchtigung der Lagerstabilität der Beschichtungsmittel führt.

Gegenstand der Erfindung sind hitzehärtbare Beschichtungsmittel, bestehend im wesentlichen aus einer Bindemittelkombination aus

A) mit $\epsilon$-Caprolactam blockierte Isocyanatgruppen aufweisenden Vorpolymerisaten eines durchschnittlichen Molekulargewichts von 1 000 bis 10 000 auf Basis von

A1) aromatischen Polyisocyanaten und
A2) Hydroxylgruppen aufweisenden organischen Verbindungen und

B) einer Härter-Komponente, bestehend aus mindestens einem cycloaliphatischen Polyamin mit mindestens 2 primären Aminogruppen

in einem Äquivalentverhältnis von blockierten Isocyanatgruppen zu Aminogruppen von 1:1 bis 1:1,5, sowie gegebenenfalls aus der Beschichtungstechnologie bekannten Hilfs- und Zusatzstoffen, dadurch gekennzeichnet, daß

2

die Komponente A2) zu 50 bis 100 Hydroxyläquivalent-% aus Hydroxylgruppen aufweisenden Polyestern und zu 0 bis 50 Hydroxyläquivalent-% aus Estergruppen-freien Polyhydroxylverbindungen besteht.

Gegenstand der Erfindung ist auch die Verwendung dieser Beschichtungsmittel zur Herstellung von überbrennfesten, steinschlagfesten Grundierungen auf gegebenenfalls vorbehandelten, metallischen Substraten unter Hitzevernetzung der nach üblichen Methoden der Beschichtungstechnologieaufgetragenen Beschichtungen.

Als aromatische Polyisocyanate A1) kommen insbesondere handelsübliche aromatische Polyisocyanate in Betracht. Beispielhaft genannt seien 2,4-Diisocyanatotoluol, dessen technische Gemische mit bis zu 35 Gew.-%, bezogen auf Gemisch, an 2,6-Diisocyanatotoluol, 4,4'-Diisocyanatodiphenylmethan, dessen technische Gemische mit bis zu 50, vorzugsweise bis zu 40 Gew.-%, bezogen auf Gemisch, an 2,4'-Diisocyanatodiphenylmethan, sowie gegebenenfalls bis zu 5 Gew.-%, bezogen auf Gemisch, an 2,2'-Diisocyanatodiphenylmethan, Gemische der genannten Diisocyanatodiphenylmethan-Isomeren mit ihren höheren, mehr als 2 Isocyanatgruppen aufweisenden Homologen, wobei diese Gemische im allgemeinen mindestens 80 Gew.-% der genannten Diisocyanatodiphenylmethan-Isomeren aufweisen, sowie beliebige Gemische der beispielhaft genannten Polyisocyanate.

Bei den Polyhydroxylverbindungen A2) handelt es sich im wesentlichen um Hydroxylgruppen aufweisende Polyester oder um Gemische von Hydroxylgruppen aufweisenden Polyestern mit bis zu 50 Hydroxyl-Äquivalent-% an Estergruppen-freien Polyhydroxylverbindungen, insbesondere an Hydroxylgruppen aufweisenden Polyethern. Diese Polyetherpolyole werden gegebenenfalls zur Regulierung der Viskosität mitverwendet.

Geeignete Polyesterpolyole, d.h. Hydroxylgruppen aufweisende Polyester, sind beispielsweise die an sich bekannten Kondensationsprodukte von mehrbasischen Säuren oder Anhydriden mehrbasischer Säuren mit überschüssigen Mengen an mehrwertigen Alkoholen. Geeignete mehrbasische Säuren oder Säureanhydride sind beispielsweise Adipinsäure, Maleinsäure, Maleinsäureanhydrid, Phthalsäure, Phthalsäureanhydrid, Tetrahydrophthalsäure, Tetrahydrophthalsäureanhydrid, Hexahydrophthalsäure, Hexahydrophthalsäureanhydrid oder Gemische derartiger mehrbasischer Säuren bzw. Säureanhydride. Geeignete mehrwertige Alkohole sind beispielsweise solche des Molekulargewichtsbereichs 62 bis 200, wie Ethylenglykol, Propylenglykol, die isomeren Butandiole, Pentandiole, Hexandiole, Octandiole, Glycerin, Trimethylolpropan oder beliebige Gemische derartiger mehrwertiger Alkohole. Die aus diesen Ausgangsmaterialien hergestellten, erfindungsgemäß als Komponente A2) oder als Teil der Komponente A2) einsetzbaren Polyesterpolyole weisen im allgemeinen ein aus der Stöchiometrie der Ausgangsmaterialien errechenbares Molekulargewicht von 400 bis 4 000 auf. Besonders bevorzugt sind Polyesterpolyole aus Adipinsäure und Neopentylglykol und/oder 1,6-Dihydroxyhexan des Molekulargewichtsbereichs 500 bis 2 000.

Geeignete Ausgangskomponenten A2) sind auch Polylactondiole, beispielsweise Umsetzungsprodukte von Hexandiol-1,6 mit $\epsilon$-Caprolacton des Molekulargewichtsbereich 500 bis 1 500.

Ebenfalls als Komponente A2) bzw. als Teil der Komponente A2) geeignete Polyesterpolyole sind Polycarbonatdiole, insbesondere Hexandiol-1,6-polycarbonatdiole des Molekulargewichtsbereichs 500 bis 2 000, wie sie durch Kondensation des Diols mit Diphenylcarbonat oder Dimethylcarbonat in an sich bekannter Weise zugänglich sind.

Ein Teil der Polyesterpolyole A2) kann auch aus schwerverseifbaren Oligoestern langkettiger, hydroxylgruppenhaltiger Carbonsäuren bestehen. Hier sei Rizinusöl beispielhaft genannt. Die Mitverwendung derartiger Ester ist allerdings weniger bevorzugt. Sie werden, falls überhaupt, allenfalls in Mengen bis maximal 30 Hydroxyl-Äquivalent-%, bezogen auf die gesamte Komponente A2) eingesetzt.

Bei den gegebenenfalls mitverwendeten Polyhydroxypolyethern handelt es sich um die an sich bekannten Polyadditionsprodukte von Epoxiden, z.B. Ethylen- oder Propylenoxid, an niedermolekularen Polyolen. Bevorzugt sind Propylenoxidpolyether, die auf Bisphenol A oder Trimethylolpropan gestartet werden und ein aus Hydroxylgruppengehalt und Funktionalität errechenbares Molekulargewicht von 344 bis 3 000, vorzugsweise von 344 bis 800, besitzen. Grundsätzlich möglich, jedoch keinesfalls bevorzugt, ist auch die Mitverwendung von anderen Estergruppen-freien Polyhydroxylverbindungen wie z.B. den als Aufbaukomponenten für die Polyesterpolyole genannten mehrwertigen Alkoholen des Molekulargewichtsbereichs 62 bis 200 als Teil der Komponente A2).

Die Herstellung der blockierten NCO-Vorpolymerisate erfolgt in an sich bekannter Weise, beispielsweise in einer zweistufigen Reaktion durch Umsetzung der beispielhaft genannten Polyhydroxylverbindungen A2) mit überschüssigen Mengen an Polyisocyanaten A1), wobei gegebenenfalls ein hoher Polyisocyanat-Überschuß eingesetzt werden kann, wonach nicht an der Reaktion beteiligte überschüssige Mengen anschließend an die Umsetzung beispielsweise destillativ (Dünnschichtverdampfer) entfernt werden können. Vorzugsweise erfolgt die Umsetzung jedoch unter Einhaltung eines NCO/OH-Äquivalentverhältnisses von 2:1 bis 2,5:1. Art und Mengenverhältnisse der Ausgangskomponenten A1) und A2) werden im übrigen so bemessen, daß die resultierenden NCO-Vorpolymerisate einen NCO-Gehalt von 3,0 bis 7,0, vorzugsweise 4,5 bis 6,0 Gew.-% aufweisen. Im Anschluß an die Herstellung der NCO-Vorpolymerisate erfolgt die Blockierungsreaktion mit vorzugsweise stöchiometrischen Mengen an ε-Caprolactam, gegebenenfalls unter Zuhilfenahme von Lösungsmitteln. Beide Umsetzungen werden im allgemeinen bei Temperaturen von ca. 60 bis 120°C, vorzugsweise 80 bis 100°C, durchgeführt.

Die Herstellung der blockierten NCO-Vorpolymerisate A) kann jedoch auch in einer Eintopfreaktion erfolgen, indem Polyhydroxylverbindungen A2) ε-Caprolactam und Polyisocyanat A1) innerhalb der gerade genannten Temperaturbereiche bis zum Verschwinden der NCO-Bande (IR-Spektrum) umgesetzt werden. In erster Näherung wählt man die Mengenverhältnisse der Reaktionspartner dabei so, daß auf 2 NCO-Äquivalente etwa 1 Hydroxyl- und 1 Lactam-Äquivalent entfallen.

Die so hergestellten blockierten NCO-Vorpolymerisate A) können zwecks Einstellung der optimalen Spritzviskosität der Beschichtungsmittel mit organischen Lösungsmitteln in einer Größenordnung von 25 bis 50 Gew.-%, bezogen auf Lösung, verdünnt werden. Beispielsweise können übliche Lacklösungsmittel, wie z.B. ®Solvesso 100, Solventnaphtha, Isobutanol, Butylacetat und/oder Methoxypropylacetat verwendet werden.

Bei der Härterkomponente B) handelt es sich um cycloaliphatische Polyamine mit mindestens 2 primären Aminogruppen. Beispielhaft genannt seien 4,4'-Diamino-dicyclohexylmethan, 1,4-Diaminocyclohexan, 3,3,5-Trimethyl-5-aminomethyl-cyclohexylamin (IPDA) oder auch perhydrierte Triamino-diphenylmethane, wie sie gemäß DE-OS 3 417 683 zur Herstellung der entsprechenden cycloaliphatischen Triisocyanate eingesetzt werdend Beliebige Gemische derartiger Polyamine können ebenfalls verwendet werden. Bevorzugt ist 3,3'-Dimethyl-4,4'-diamino-dicyclohexylmethan.

Die Herstellung der Bindemittelkombinationen erfolgt durch Vermischen der Komponenten A) und B), gegebenenfalls unter Mitverwendung der bereits oben beispielhaft genannten Lösungsmittel, wobei die Mengenverhältnisse so gewählt werden, daß ein Äquivalentverhältnis von blockierten NCO-Gruppen zu Aminogruppen von 1:1 bis 1:1,5, vorzugsweise von 1:1,1 bis 1:1,4, vorliegt.

Gewünschtenfalls können den erfindungsgemäßen Beschichtungsmitteln übliche Hilfs- und Zusatzmittel der Lacktechnologie, wie beispielsweise Pigmente, Verlaufmittel, UV-Stabilisatoren, Antioxidantien, Füllstoffe oder Thixotropierungsmittel beigemischt werden.

Die Vereinigung der Bindemittelkombinationen mit den Hilfs- und Zusatzmitteln kann vor, gleichzeitig oder im Anschluß an die Durchmischung der Komponenten A) und B) erfolgen.

Die erfindungsgemäßen Beschichtungsmittel eignen sich insbesondere zur Herstellung von Einbrennbeschichtungen auf gegebenenfalls vorbehandelten metallischen Substraten, insbesondere solchen, wie sie beim Automobilbau zum Einsatz gelangen. Die Beschichtungen werden im allgemeinen innerhalb des Temperaturbereichs von 160 bis 200°C eingebrannt.

In den nachfolgenden Beispielen beziehen sich alle Prozentangaben auf das Gewicht.

Beispiel 1

Dieses Beispiel beschreibt die Herstellung eines erfindungsgemäßen Beschichtungsmittels und die Eigenschaften einer damit hergestellten Beschichtung.

## 1.1 Herstellung des Bindemittels

**<u>Ansatz</u>**

```
510 g (0,6 Val)   eines Adipinsäure-Hexandiol-Neopen-
                  tylglykol-Polyesters (Gew.-Verhältnis
                  Hexandiol:Neopentylglykol = 77:36)
                  mit der OH-Zahl 66
110 g (0,4 Val)   eines auf Bisphenol A gestarteten
                  Polypropylenoxides der OH-Zahl 204
183 g (2,1 Val)   2,4-Toluylendiisocyanat
124 g (1,1 Mol)   ε-Caprolactam
309 g (75 %ig)    ®Solvesso 100
```
_____
```
1 236 g (1,1 Val block. NCO-Gruppen)
  100 g (0,089 Val) obiges blockiertes NCO-Vorpolymeri-
                    sat
 15,0 g (0,126 Val  NH₂) 3,3'-Dimethyl-4,4'-diaminodi-
                    cyclohexyl-methan
      block. NCO/NH₂ = 1:1,4
```

<u>Durchführung:</u>

Polyester, Polyether und Toluylendiisocyanat werden in den oben angegebenen Mengen vorgelegt und unter Rühren auf 80 bis 90 °C erwärmt. Nach einer Umsetzungsdauer von ca. 2,5 Stunden bei 90 °C wird ein NCO-Gehalt von 5,5 % gemessen (berechnet 5,7 %). Man trägt portionsweise pulverförmiges ε-Caprolactam ein, verdünnt mit ®Solvesso 100 und setzt noch ca. 5 Stunden bei 90 °C um, bis kein NCO-Gehalt mehr nachweisbar (IR-Spektrum) ist. Die blockierte NCO-Vorpolymerisat-Lösung hat eine Viskosität bei 23 °C von ca. 8 000 mPas und ein blockiertes NCO-Äquivalent von 1 130 g.

Der Weichsegmentanteil, d.h. das Polyester/Polyether-Segment, dieses NCO-Vorpolymerisates, besteht zu 60 Äquivalent-% aus einem hydroxylgruppenhaltigen Polyester und zu 40 Äquivalent-% aus einem hydroxylgruppenhaltigen Polyether. Bezogen auf die Massenbilanz wird deutlich, daß der Polyester die dominierende hydroxylgruppenhaltige Komponente ist:

82,3 Gew.-% Polyester

17,7 Gew.-% Polyether

Zur Herstellung des Bindemittels werden 100 Gew.-Teile der obigen Vorpolymerisat-Lösung mit 15 Gew.-Teilen 3,3'-Dimethyl-4,4'-diaminodicyclohexylmethan gemischt.

1.2 Herstellung des Beschichtungsmittels

100,0 Gew.-Teile blockiertes NCO-Vorpolymerisat gemäß 1.1
15,0 Gew.-Teile 3,3'-Dimethyl-4,4'-diamino-dicyclohexylmethan
11,3 Gew.-Teile Titandioxid (Rutil Typ)
1,2 Gew.-Teile Eisenoxidschwarz
90,5 Gew.-Teile Bariumsulfat (Extender)
2,9 Gew.-Teile hochdisperse Kieselsäure
40,4 Gew.-Teile Ethoxypropylacetat/Solventnaphtha 150
261,3 Gew.-Teile

Die obigen Komponenten werden in einem Dissolver (7 000 Umdrehungen/min) ca. 30 min dispergiert. Der resultierende Steinschlagschutz-Primer ist in dieser Form bei 40 bis 50°C für das Luft- oder Airless-Verfahren einsetzbar. Es sei darauf hingewiesen, daß sich dieses Beschichtungsmittel, mindestens 2 Monate bei 50°C gelagert, viskositätsstabil verhält.

1.2.1 Herstellung der Prüfbleche

Phosphatierte Karosseriebleche werden zunächst mit einer handelsüblichen kathodischen Tauchlackierung (KTL) beschichtet und 20 min bei 190°C eingebrannt (Schichtdicke 15 bis 20 $\mu$). Darauf wird eine Schicht (Trockenfilmdicke 120 $\mu$) der erfindungsgemäßen Grundierung gespritzt. Nach einminütigem Ablüften wird ohne weitere Zwischentrocknung "naß in naß" 40 $\mu$ handelsüblicher Polyester-Melamin-Füller aufgespritzt. Es folgt normalerweise ein Einbrennvorgang bei 160°C ca. 30 min. Für die Prüfung der Überbrennfestigkeit wird stattdessen 20 min bei 200°C eingebrannt. Abschließend wird eine 40 $\mu$ dicke Schicht aus handelsüblichem Acrylat-Einbrenndecklack (TSA) aufgetragen und 20 min bei 160°C eingebrannt.

1.3 Überbrenntest

Die in der oben beschriebenen Art beschichteten Bleche, bei denen der Steinschlagschutz-Primer bei 200°C während 20 min eingebrannt wurde, werden mittels eines Steinschlagprüfgerätes (Modell 508 von Fa. Erichsen) dem sog. VDA (Verband der Deutschen Automobilindustrie)-Test unterworfen. Einzelheiten des Tests seien schlagwortartig, wie folgt, wiedergegeben: Multischlag mit 500 g Stahlschrot von 4 bis 5 mm Durchmesser, Beschußdruck 1,5 bis 2 bar, Förderzeit ca. 5 s. Die Auswirkung des Tests wird anschließend mittels einer Korrosionsprüfung, z.B. der Salznebelprüfung nach ASTM 3117, sichtbar gemacht. Hierbei gibt es 10 Beurteilungskriterien anhand einer Bildertafel zwischen den Kennwerten 0 bis 5.

Die Steinschlaggrundierung dieses Beispiels schneidet mit dem besten möglichen Testergebnis, dem Kennwert 0 bis 1, ab, d.h. der Lackaufbau bleibt unversehrt. Es ist kein einziger, den mehrschichtigen Lackaufbau durchschlagender metallisch schimmernder Flecken auf dem lackierten Blech zu entdecken. Zur Unterscheidung: wenig kleine nadelstichartige Korrosionsflecken auf dem Blech führen zu dem Kennwert 1.

Beispiel 2 (Vergleichsbeispiel)

Dieses Beispiel beschreibt den Aufbau eines Beschichtungsmittels gemäß dem Stand der Technik und die Eigenschaften einer damit hergestellten Beschichtung.

6

2.1 Herstellung des Bindemittels

**Ansatz**

| | |
|---|---|
| 1 143,0 g (1,0 Val) | eines Polyetherpolyols der OH-Zahl 49, hergestellt durch Propoxylierung eines Gemischs aus Trimethylolpropan und Glycerin im Gewichtsverhältnis 2,9:1 und anschließende Ethoxylierung des Propoxylierungsprodukts (PO:EO-Gewichtsverhältnis = 95:5) |
| 135,6 g (1,2 Mol) | ε-Caprolactam |
| 191,4 g (2,2 Val) | 2,4-Toluylendiisocyanat |

| | |
|---|---|
| 1 470,0 g (1,2 Val block. NCO-Gruppen) | Mischungsverhältnis block. NCO : $NH_2$ = 1:1,4 |
| 100,0 g (0,098 Val) | blockiertes NCO-Vorpolymerisat |
| 16,3 g (0,137 Val) | 3,3'-Dimethyl-4,4'-diaminodicyclohexyl-methan |

Durchführung:

Der obige wasserfreie Polyether, ε-Caprolactam und Toluylendiisocyanat werden eingewogen und unter Rühren in Intervallen auf 100°C geheizt. Man setzt ca. 5 Stunden bei dieser Temperatur um, bis kein NCO-Gehalt mehr nachweisbar ist (IR-Spektrum). Das blockierte, lösemittelfreie NCO-Vorpolymerisat hat bei 23°C eine Viskosität von ca. 30 000 mPas und ein blockiertes NCO-Äquivalentgewicht von 1 225 g.

2.2 Herstellung des Beschichtungsmittels

100,0 Gew.-Teile obiges blockiertes NCO-Vorpolymerisat
16,3 Gew.-Teile 3,3'-Dimethyl-4,4'-diamino-dicyclohexylmethan
11,6 Gew.-Teile Titandioxid (Rutil Typ)
1,3 Gew.-Teile Eisenoxidschwarz
90,8 Gew.-Teile Bariumsulfat (Extender)
3,0 Gew.-Teile hochdisperse Kieselsäure
50,0 Gew.-Teile Ethoxypropylacetat/Solventnaphtha 150
273,0 Gew.-Teile
Die obigen Komponenten werden, wie bereits in Beispiel 1.2 beschrieben, zu einem spritzfähigen Steinschlag-Primer verarbeitet und auf Prüfblechen mit definierter kathodischer Tauchlackierung (KTL) appliziert.

2.3 Überbrenntest

Prüflacke mit dem oben beschriebenen Lackaufbau werden bei 200°C während 20 min eingebrannt und der in Beispiel 1.3 erläuterten Steinschlagprüfung unterworfen.

Als Testergebnis wird ermittelt, daß im dünnschichtigen Overspraybereich der Kennwert bei 4, dem drittschlechtesten Wert, liegt, d.h. auf dem größten Teil der Prüfzone schimmert das Metall bzw. die KTL durch. Steinschlag-Primer, Füller und Decklack wurden durch das Schrot des Prüfergerätes fast vollständig weggerissen. Damit wird gezeigt, daß durch den Überbrennvorgang die Haftung dieses Steinschlag-Primers weitgehend verlorengegangen ist.

Beispiel 3

3.1 Herstellung des Bindemittels

## Ansatz

| | |
|---|---|
| **600 g (0,6 Val)** | **eines Hexandiol-1,6-Polycarbonates mit der OH-Zahl 56** |
| **110 g (0,4 Val)** | **des Bisphenol A gestarteten Polypropylenoxides der OH-Zahl 204 gemäß Beispiel 1** |
| **124 g (1,1 Val)** | **ϵ-Caprolactam** |
| **183 g (1,0 Val)** | **2,4-Toluylendiisocyanat (TDI)** |
| **550 g (65 %ig)** | **®Solvesso 100** |

**1 567 g (1,1 Val block. NCO-Gruppen)**
**100 g (0,0638 Val)      obiges NCO-Vorpolymerisat**
**10 g (0,084 Val NH₂)   3,3'-Dimethyl-4,4'-diaminodicyclohexyl-methan**

**block. NCO/NH₂ = 1:1,3**

Durchführung

Aus den obigen Polyolen, ϵ-Caprolactam und ®Solvesso 100 wird unter Erwärmung (ca. 50°C) und Rühren eine Lösung hergestellt. In diese Lösung trägt man in einem Guß die Gesamtmenge an TDI ein und setzt bei 100°C um. Nach einer Reaktionszeit von ca. 4 Stunden ist kein NCO-Gehalt mehr feststellbar. Die blockierten NCO-Vorpolymerisat-Lösung hat bei 23°C eine Viskosität von ca. 3 400 mPas und ein blockiertes NCO-Äquivalentgewicht von 1 425 g.

Zur Herstellung des Bindemittels werden 100 Gew.-Teile dieser Vorpolymerisat-Lösung mit 10 Gew.-Teilen 3,3'-Dimethyl-4,4'-diaminodicyclohexylmethan gemischt.

3.2 Herstellung des Beschichtungsmittels

100,0 Gew.-Teile obiges blockiertes NCO-Vorpolymerisat
10,0 Gew.-Teile 3,3'-Dimethyl-4,4'-diaminodicyclohexylmethan
11,5 Gew.-Teile Titandioxid (Rutil-Typ)
1,2 Gew.-Teile Eisenoxidschwarz
90,5 Gew.-Teile Bariumsulfat (Extender)
3,3 Gew.-Teile hochdisperse Kieselsäure
50,5 Gew.-Teile Ethoxypropylacetat/Solventnaphtha 150
267,0 Gew.-Teile

Die obigen Komponenten werden, wie bereits in Beispiel 1.2 bzw. 1.2.1 beschrieben, zu einem spritzfähigen Steinschlagschutz-Primer verarbeitet und auf Prüfblechen appliziert.

### 3.3 Ergebnis des Überbrenntests

Die mit obigem Steinschlagschutz-Primer versehenen Prüfbleche werden, wie in Beispiel 1.2.1 beschrieben, "überbrannt" und danach dem VDA-Steinschlagtest (vergl. Beispiel 1.3) unterzogen.

Die Steinschlaggrundierung dieses Beispiels schneidet, wie diejenige des Beispiels 1, mit dem besten möglichen Prüfwert, dem Kennwert 0 bis 1, ab, d.h. der gesamte Lackaufbau, bestehend aus KTL, obigem Primer sowie den in Beispiel 1 erwähnten Handelsüblichen Füller und Decklack, bleibt unversehrt.

Beispiel 4

### 4.1 Herstellung des Bindemittels

**Ansatz**

```
510    g (0,6 Val)   des Adipinsäure-Hexandiol-Neopen-
                     tylglykol-Polyesters mit der OH-
                     Zahl 66 gemäß Beispiel 1
102,0  g (0,3 Val)   Rizinusöl
  5,8  g (0,1 Val)   Hexandiol-1,6
125,0  g (1,1 Val)   ε-Caprolactam
183,0  g (2,1 Val)   2,4-Toluylendiisocyanat (TDI)
310,2  g (75 %ig)    ®Solvesso 100
```
---
```
1 236,0 g (1,1 Val block. NCO-Gruppen)
  100   g (0,089 Val)       obiges NCO-Vorpolymerisat
   13,8 g (0,116 Val NH₂)   3,3'-Dimethyl-4,4'-diaminodi-
                            cyclohexyl-methan
block. NCO/NH₂ = 1:1,3
```

### Durchführung

Polyester, Hexandiol-1,6-Rizinusöl und ε-Caprolactam werden unter Rühren und Wärmezufuhr (ca. 50°C) in ®Solvesso 100 gelöst. Man fügt die Gesamtmenge an TDI hinzu und steigert die Temperatur auf ca. 90°C. Nach ca. 4 Stunden Umsetzungsdauer bei 90°C ist kein NCO mehr nachweisbar, Die blockioerte NCO-Vorpolymerisat-Lösung hat bei 23°C eine Viskosität von ca. 6 000 mPas und ein blockiertes NCO-Äquivalentgewicht von 1 124 g.

Zur Herstellung des Bindemittels werden 100 Gew.-Teile dieser Vorpolymerisat-Lösung mit 13,8 Gew.-Teilen 3,3'-Dimethyl-4,4'-diamino-dicyclohexyl-methan gemischt.

4.2 Herstellung des Beschichtungsmittels

100,0 Gew.-Teile obiges blockiertes NCO-Vorpolymerisat
13,8 Gew.-Teile 3,3'-Dimethyl-4,4'-diaminodicyclohexylmethan
11,0 Gew.-Teile Titandioxid (Rutil-Typ)
1,0 Gew.-Teile Eisenoxidschwarz
89,5 Gew.-Teile Bariumsulfat (Extender)
2,7 Gew.-Teile hochdisperse Kieselsäure
40,3 Gew.-Teile Ethoxypropylacetat/Solventnaphtha 150
258,3 Gew.-Teile

Die obigen Komponenten werden, wie bereits in Beispiel 1.2 erwähnt, in einem Dissolver dispergiert. Der resultierende Steinschlagschutz-Primer ist in dieser Form bei 40 bis 50 °C für das Luft- und Airless-Verfahren einsetzbar.

4.3 Ergebnis des Überbrenntests

Wie bereits in Beispiel 1.2.1 bzw. 1.3 erläutert, werden Prüflacke mit einer handelsüblichen KTL zuerst mit obigem Primer, danach "naß in naß" mit einem handelsüblichen Füller beschichtet. Danach erfolgt der "Überbrennvorgang" bei 200 °C ca. 20 min. Anschließend wird ein handelsüblicher Decklack aufgetragen und 20 min bei 160 °C eingebrannt.

Prüfbleche mit diesem Lackaufbau werden der VDA-Steinschlagprüfung (vergl. Beispiel 1.3) unterzogen.

Das Testergebnis hat, wie auch in Beispiel 1, den bestmöglichen Wert, den Kennwert 0 bis 1. Der gesamte Lackaufbau bleibt unbeschädigt.

**Patentansprüche**

**1.** Hitzehärtbares Beschichtungsmittel, bestehend im wesentlichen aus einer Bindemittelkombination aus

A) mit $\epsilon$-Caprolactam blockierte Isocyanatgruppen aufweisenden Vorpolymerisaten eines durchschnittlichen Molekulargewichts von 1 000 bis 10 000 auf Basis von

A1) aromatischen Polyisocyanaten und

A2) Hydroxylgruppen aufweisenden organischen Verbindungen und

B) einer Härter-Komponente, bestehend aus mindestens einem cycloaliphatischen Polyamin mit mindestens 2 primären Aminogruppen

in einem Äquivalentverhältnis von blockierten Isocyanatgruppen zu Aminogruppen von 1:1 bis 1:1,5, sowie gegebenenfalls aus der Beschichtungstechnologie bekannten Hilfs- und Zusatzstoffen, dadurch gekennzeichnet, daß

die Komponente A2) zu 50 bis 100 Hydroxyläquivalent-% aus Hydroxylgruppen aufweisenden Polyestern und zu 0 bis 50 Hydroxyläquivalent-% aus Estergruppen-freien Polyhydroxylverbindungen besteht.

**2.** Verwendung der Beschichtungsmittel gemäß Anspruch 1 zur Herstellung von überbrennfesten, steinschlagfesten Grundierungen auf gegebenenfalls vorbehandelten, metallischen Substraten unter Hitzevernetzung der nach üblichen Methoden der Beschichtungstechnologie aufgetragenen Beschichtungen.

**Claims**

**1.** A thermosetting coating agent consisting substantially of a binder combination of

A) prepolymers containing isocyanate groups blocked with $\epsilon$-caprolactam and having an average molecular weight of 1 000 to 10 000 and based on

A1) aromatic polyisocyanates and

A2) organic compounds containing hydroxyl groups and

B) an activator component comprising at least one cycloaliphatic polyamine with at least two primary amino groups

in an equivalent ratio of blocked isocyanate groups to amino groups of 1 : 1 to 1 : 1.5, optionally with known coating additives and adjuvants, characterised in that

50 to 100 hydroxyl equivalent % of component A2) consists of polyesters containing hydroxyl groups and 0 to 50 hydroxyl equivalent % consists of polyhydroxyl compounds free from ester groups.

**2.** Use of the coating agents according to claim 1 to produce stoving-resistant, gravel-proof primer coatings on optionally pretreated metal substrates, the coatings being applied by conventional methods and cross-linked by heating.

**Revendications**

**1.** Agent d'enduction thermodurcissable constitué essentiellement d'une combinaison de liants constituée par

A) des prépolymères présentant des groupes isocyanate bloqués avec du ε-caprolactame, d'un poids moléculaire moyen de 1.000 à 10.000 à base de

A1) polyisocyanates aromatiques et

A2) composés organiques présentant des groupes hydroxyle, et

B) un composant de durcisseur constitué d'au moins une polyamine cycloaliphatique contenant au moins 2 groupes amino primaires,

dans un rapport d'équivalents des groupes isocyanate bloqués aux groupes amino de 1:1 à 1:1,5, ainsi qu'éventuellement par des adjuvants et des additifs connus de la technologie d'enduction, caractérisé en ce que

le composant A2) est constitué, à concurrence de 50 à 100% d'équivalent hydroxyle, par des polyesters présentant des groupes hydroxyle et, à concurrence de 0 à 50% d'équivalent hydroxyle, par des composés polyhydroxylés exempts de groupes ester.

**2.** Utilisation des agents d'enduction selon la revendication 1, pour la préparation de couches de fond résistant aux chutes ou impacts de pierres et résistant à la surcuisson, sur des substrats métalliques éventuellement prétraités, avec réticulation à la chaleur des enductions appliquées conformément aux procédés habituels de la technologie de l'enduction.